(19) Europäisches Patentamt
European Patent Office
Office européen des brevets

(11) **EP 2 371 588 B1**

(12) **EUROPÄISCHE PATENTSCHRIFT**

(45) Veröffentlichungstag und Bekanntmachung des Hinweises auf die Patenterteilung:
**10.10.2012   Patentblatt 2012/41**

(21) Anmeldenummer: **10003262.2**

(22) Anmeldetag: **26.03.2010**

(51) Int Cl.:
***B60H 1/22*** *(2006.01)*      ***F24H 9/20*** *(2006.01)*
***G05D 23/24*** *(2006.01)*      ***H05B 1/02*** *(2006.01)*

(54) **Elektrische Heizvorrichtung**

Electric heating device

Dispositif de chauffage électrique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**05.10.2011   Patentblatt 2011/40**

(73) Patentinhaber: **Eberspächer catem GmbH & Co. KG**
**76863 Herxheim (DE)**

(72) Erfinder:
• **Pannier, Benjamin**
**76133 Karlsruhe (DE)**

• **Reiss, Holger**
**76764 Rheinzabern (DE)**

(74) Vertreter: **Grünecker, Kinkeldey, Stockmair & Schwanhäusser**
**Leopoldstrasse 4**
**80802 München (DE)**

(56) Entgegenhaltungen:
**EP-A1- 1 524 139        EP-A2- 1 157 868**
**WO-A2-02/45985        WO-A2-2005/000608**
**DE-A1-102008 056 757    US-A1- 2008 080 844**

**Beschreibung**

Die vorliegende Erfindung betrifft eine elektrische Heizvorrichtung für ein Kraftfahrzeug. Die vorliegende Erfindung betrifft insbesondere eine elektrische Heizvorrichtung, die speziell geeignet ist für ein Kraftfahrzeug, dessen Antriebseinheit keine ausreichende Abwärme zur Erwärmung oder Klimatisierung des Fahrgastinnenraums abgibt. Dies ist zum Beispiel bei Fahrzeugen mit Elektro- oder Hybridantrieb der Fall.

Eine entsprechende Heizvorrichtung muss sich deshalb dazu eignen, sowohl den Innenraum des Kraftfahrzeugs mit der erforderlichen Heizwärme zu versorgen, als auch die für die ablaufenden Prozesse in einzelnen Anlagenteilen des Kraftfahrzeugs erforderliche oder zumindest diese fördernde Wärme bereitzustellen, wie zum Beispiel zur Vorwärmung des Fahrzeugakkumulators.

Es ist im Stand der Technik bekannt, für diese Zwecke sogenannte Widerstandsheizelemente oder PTC (positive temperature coeffizient)-Heizelemente einzusetzen. Diese sind selbstregelnd, da sie mit zunehmender Erwärmung einen höheren Widerstand zeigen, und somit bei gleicher Spannung eine geringere Menge an Strom durchlassen. Die selbstregelnden Eigenschaften der PTC- Heizelemente verhindern somit eine Überhitzung.

Dementsprechend werden PTC- Heizelemente regelmäßig in Radiatoren eingesetzt, die insbesondere der Erwärmung des Fahrgastinnenraumes bei solchen Fahrzeugen dienen, deren Antrieb keine ausreichende Prozesswärme zur Klimatisierung oder Heizung des Fahrzeuginnenraums abgibt. Bei Hybridfahrzeugen kann eine PTC- Heizvorrichtung auch als Zuheizer in den Phasen, in denen der Verbrennungsmotor nicht läuft (zum Beispiel an der Ampel oder im Stau) eingesetzt werden.

Die Luft im Fahrgastinnenraum wird mit Hilfe der PTC- Widerstandsheizelemente entweder direkt (Luftheizung) oder indirekt über einen Warmwasserkreislauf, in dem warmes Wasser durch Radiatoren strömt (Warmwasserheizung), erwärmt. In beiden Fällen wird unmittelbar durch die Heizelemente ein strömendes Fluid, das heißt ein flüssiges oder gasförmiges Medium, erwärmt: vorzugsweise Wasser oder Luft.

Ein Beispiel für eine elektrische PTC- Heizung mit einer Mehrzahl von Heizelementen für ein Kraftfahrzeug ist aus DE 198 45 401 A1 bekannt. Bei einem Heizelement ist die Heizleistung mit einer PWM- Ansteuerung kontinuierlich einstellbar, bei allen anderen Heizelementen ist sie nur binär vollständig zu- oder abschaltbar.

Bei einer Kraftfahrzeugheizung ist es wünschenswert, auch unter sich ständig ändernden Umgebungs- und Betriebsbedingungen (insbesondere Bordnetzspannung sowie Temperatur und Strömungsgeschwindigkeit des Fluids), die Heizleistung einer elektrischen Heizvorrichtung möglichst genau an eine Leistungsvorgabe anzupassen.

Bei PTC-Widerstandsheizungen ergibt sich hieraus ein Problem angesichts der ausgeprägten Abhängigkeit des Verhaltens eines PTC von den Umgebungs- und Betriebsbedingungen im automobiltechnischen Hochvoltbereich, also im Bereich einiger 100 V. Dies betrifft speziell Fahrzeuge mit Elektroantrieb, da bei diesen die Bordnetzspannung bis zu 500 Volt beträgt und somit - automobiltechnisch gesehen - im Hochvoltbereich liegt. Die BGI (Berufs-genossenschaftliche Information) 8686 definiert "Hochvolt" als "Spannungen oberhalb 25VAC oder 60VDC".

Eine lediglich auf Nominalbedingungen (feststehende Bordnetzspannung und z.B. 0° C Lufttemperatur bei bestimmter Strömungsgeschwindigkeit für einen Luftheizer) basierende Ansteuerung, die bei niedrigen Spannungen (im automobiltechnischen Niedervoltbereich von z.B. ca. 12V oder ca. 24V) häufig noch brauchbare Ergebnisse liefert, ist somit für eine präzise Einhaltung von Leistungsanforderungen im automobiltechnischen Hochvoltbereich unzureichend.

Von besonderem Einfluss sind gerade im Hochvoltbereich Schwankungen der Bordnetzspannung U. Bei 12V- Bordnetzen spielt eine Spannungsschwankung (beispielsweise auf 12,5V) für die Heizleistung nur eine untergeordnete Rolle. Entscheidend für die Leistung P = U x I ist im wesentlichen die Stromstärke I (wesentlich höher als im automobilen Hochvoltbereich). Anders ist es beispielsweise bei einem 350V- oder 400V- Bordnetz. In diesem Bereich übliche Spannungsschwankungen von ca. +/- 50V bei geringeren Stromstärken I haben einen maßgeblichen Einfluss auf die erbrachte Heizleistung. Hinzu kommt bei den für PTC- Heizelemente verwendeten Materialien (zum Beispiel keramikähnlich auf der Basis von Bariumtitanat) im automobiltechnischen Hochvoltbereich ein Halbleitereffekt, wonach der Widerstand nicht nur von der Temperatur, sondern auch von der Spannung abhängig ist Da die PTC- Widerstände stark von der Temperatur abhängig sind, muss bei der Ansteuerung der elektrischen Heizung weiterhin berücksichtigt werden, dass die Umgebungstemperaturen (Temperaturen des strömenden Mediums) und Strömungsgeschwindigkeiten Änderungen bzw. Schwankungen unterworfen sind, da diese Parameter die Abführung der Heizwärme und somit die Betriebstemperatur des Heizelements entscheidend beeinflussen.

Eine präzise arbeitende Leistungsansteuerung für eine PTC-basierte Heizvorrichtung im automobiltechnischen Hochvoltbereich muss also in der Lage sein, schwankende Umgebungstemperaturen und sich verändernde Betriebsbedingungen zu kompensieren.

Ein elektrisches Zusatzheizsystem für ein Fahrzeug, bei dem eine Leistungsregelung über PWM erfolgt, ist in der Druckschrift DE 10 2008 056 757 A1 beschrieben die Heizvorrichtung verfügt über eine angeschlossene Stromdetektionseinheit zum Messen eines Stroms durch die Heizvorrichtung. Die Steuerung erfolgt so, dass ein PWM-Tastverhältnis von einer Steuereinheit entsprechend einem vorgegebenen Leistungssollwert eingegeben wird. Der Heizleistungssollwert hängt von einer Batteriespannung ab und ist nach oben begrenzt (Pmax). In einem nachgelagerten Regelkreis wird die Ist-Leistung mit dem Sollwert verglichen, und durch Einstellung des PWM-Tastverhältnisses in einem nachgelagerten Regelkreis angepasst.

Aufgrund des großen Einflusses der Bordnetzspannung im automobiltechnischen Hochvoltbereich, kommt es bei Bordnetzen im Hochvoltbereich besonders darauf an, Schwankungen der Bordspannung möglichst schnell und präzise bereitstellen zu können.

Es ist Aufgabe der vorliegenden Erfindung, eine verbesserte elektrische Heizvorrichtung für ein Kraftfahrzeug und ein Ansteuerungsverfahren für eine elektrische Heizvorrichtung bereitzustellen, mit denen die Heizleistung auch unter schwankenden Umgebungs- und Betriebsbedingungen präzise an eine vorgegebene Leistungsanforderung angepasst werden und die Anpassung mit der Zeit aufrechterhalten werden kann.

Diese Aufgabe wird durch eine elektrische Heizvorrichtung mit den Merkmalen des Anspruchs 1 und ein Verfahren mit den Merkmalen des Anspruchs 11 gelöst.

Es ist der besondere Ansatz der vorliegenden Erfindung, eine vorab, zum Beispiel beruhend auf festgelegten Nominalbedingungen für die Umgebungs- und Betriebsparameter, eingestellte Heizleistung einer Heizvorrichtung für Kraftfahrzeuge in einem nachgelagerten Regelkreis an eine vorgegebene Leistungsanforderung anzupassen. Hierzu erfolgt eine ständige Messung des Gesamtheizstroms. Darauf basierend wird unter Berücksichtigung der Bordspannung die momentane Heizleistung der Heizvorrichtung bestimmt. Die Nachregelung erfolgt auf Grundlage der Sollwertabweichung der aktuellen Heizleistung. Erfindungsgemäß wird damit eine elektrische Heizvorrichtung so angesteuert, dass auch unter schwankenden Umgebungsbedingungen und bei Heizelementen mit nichtlinearer Charakteristik eine vorgegebene Leistungsanforderung ständig möglichst genau erfüllt werden kann.

Für die Messung des Gesamtheizstroms wird vorzugsweise ein Hall-Sensor vorgesehen. Dies ermöglicht eine einfache, kostengünstige und robuste Strommessung, bei der Probleme hinsichtlich elektromagnetischer Verträglichkeit (EMV) vermieden werden. Demgegenüber würde eine Strommessung im Hochvoltbereich im Kraftfahrzeug mit einem Shunt zu hohen Störungen führen, so dass keine sinnvolle Messung mehr möglich wäre. Im Falle einer Heizeinrichtung für ein Kraftfahrzeug mit einer Bordspannung im automobiltechnischen Hochvoltbereich von einigen hundert Volt ist der Hall-Sensor direkt in den Steuerkreis im Niedervoltbereich eingebunden. Somit steht der auf den Hochvoltbereich bezogene Strommesswert unmittelbar einer Verarbeitung im Niedervoltbereich zur Verfügung. Weiterhin wird damit eine vorgeschriebene Isolation zwischen dem Steuerkreis mit Niederspannung und dem Lastkreis im Hochvoltbereich eingehalten.

Gemäß einer bevorzugten Ausführungsform umfasst die Heizvorrichtung weiterhin einen Komparator zum Bestimmen einer Abweichung der momentanen Heizleistung von dem Sollwert. Die Nachregelung erfolgt auf dieser Grundlage so, dass die Abweichung der momentanen Heizleistung von dem Sollwert minimiert wird.

Vorzugsweise umfasst die Heizvorrichtung eine elektrische Heizstufe mit mindestens einem Heizelement, die kontinuierlich oder feinstufig einstellbar ist.

Gemäß einer bevorzugten Ausführungsform umfasst die elektrische Heizvorrichtung weiterhin eine oder mehrere weitere elektrische Heizstufen mit jeweils mindestens einem Heizelement. Bei den weiteren elektrischen Heizstufen handelt es sich vorzugsweise um sogenannte binäre Heizstufen, die nur jeweils zwischen Null und einer Maximalleistung umschaltbar sind. Die Heizleistung der Heizelemente ist durch die Steuereinrichtung über den durch die Heizelemente jeweils fließenden Strom für die Heizstufen separat einstellbar. Ein derartiges Ansteuerungskonzept ermöglicht eine kombinierte Ansteuerung, bei der für die Ansteuerung größerer Leistungsstufen binäre Heizstufen verwendet werden. Nur für die Feineinstellung wird eine kleine Heizstufe kontinuierlich oder feinstufig (quasikontinuierlich) geschaltet. Im Hochvoltbereich beim einfachen Ansteuern der Heizkreise (z.B. durch ein PWM-Signal) normalerweise entstehende massive Störungen, z.B. durch EMV (elektromagnetische Verträglichkeit)-Abstrahlung oder leitungsgebundene Störungen, werden hierdurch vermieden.

Vorzugsweise kann auch das Umschalten der weiteren Heizstufen durch die Steuereinrichtung zur Anpassung der Leistungsaufnahme an den Sollwert verwendet werden.

Gemäß der vorliegenden Erfindung wird die Bordspannung unmittelbar in der Heizvorrichtung gemessen. Dies geschieht vorzugsweise auf der Platine, also hochvoltseitig. Die Messung kann permanent oder in vorbestimmten Zeitabständen erfolgen.

In einer weiteren bevorzugten Ausführungsform ist die Heizleistung einer ersten Heizstufe feinstufig über eine Modulation des durch das Heizelement fließenden Stroms einstellbar. Unter "feinstufig" ist eine schrittweise Einstellbarkeit in einer Mehrzahl von Schritten zu verstehen, wobei die Zahl der Schritte so gewählt ist, dass die Leistungssprünge der ersten Schritte klein gegenüber der erreichbaren Gesamtleistung der Heizstufe sind. Hierzu wird vorzugsweise in einem nichtflüchtigen Speicher eine Zuordnungstabelle gespeichert. Der nichtflüchtige Speicher kann weiterhin vorzugsweise mit einem nichtflüchtigen Speicher integriert sein, in welchem gemäß einer bevorzugten Ausführungsform die Bordspannung als Festwert hinterlegt ist. Insbesondere kann es sich hierbei um ein EEPROM oder einen anderen programmierbaren Festwertspeicher handeln. Es ist aber auch möglich, einen solchen nichtflüchtigen Speicher für die Zuordnungstabelle separat vorzusehen. Die Bordspannung kann dann auch auf andere Weise bereitgestellt werden.

In der Zuordnungstabelle wird jeder einer Mehrzahl vorgegebener Leistungsstufen (Nennleistung) eine entsprechende Zeitdauer der Ansteuerung des Heizelementes unter einer vorgegebenen Nenn-Bordspannung zugeordnet. Gemäß einer beispielhaften bevorzugten Ausführungsform liegt die Gesamtleistung der ersten Heizstufe im oberen dreistelligen Wattbereich, z.B. 750 W. Es sind aber beispielsweise auch 1000 W oder mehr möglich. Die Anzahl der hierbei möglichen vorgegebenen Leistungsstufen liegt in der beispielhaften Ausführungsform im oberen einstelligen Bereich, z.B. 7 oder 8. Die Steuereinrichtung stellt die Heizleistung der feinstufig einstellbaren Heizstufe dadurch ein, dass sie die entsprechende Zeitdauer dem nichtflüchtigen Speicher entnimmt, und den Stromfluss durch die Heizstufe für diese Zeitdauer innerhalb eines fest vorgegebenen Taktrahmens einschaltet (aktiviert). Es handelt sich demgemäß also um eine Ansteuerung nach dem Konzept der PWM (pulse width modulation-Pulsbreitenmodulation). Gemäß der bevorzugten Ausführungsform wird in der Zuordnungstabelle direkt eine entsprechende Zeitdauer (beispielsweise in Millisekunden) innerhalb eines vorgegebenen Taktrahmens (festen Taktrahmens) abgespeichert. Der Taktrahmen ist eine Zeitdauer (Periode), nach der sich der Wechsel von aktiviertem und nicht aktiviertem Stromfluss periodisch wiederholt. Alternativ wäre aber auch, wie bei der herkömmlichen Pulsbreitenmodulation, die Abspeicherung eines Tastverhältnisses (in %) möglich. Das Tastverhältnis gibt dabei an, für welchen Anteil der Dauer des Taktrahmens der Strom eingeschaltet (Stromfluss aktiviert) ist.

Eine solche Ansteuerung über eine modifizierte PWM, mit einer Zuordnungstabelle, eignet sich insbesondere für Heizelemente, bei denen die Leistungsabgabe nichtlinear mit dem Tastverhältnis ansteigt, wie dies bei PTC- Heizelementen im automobiltechnischen Hochvoltbereich der Fall ist. In diesem Fall ist eine einfache lineare Leistungsansteuerung, bei der die Abhängigkeit von Tastverhältnis und Leistung durch den Wert eines einzigen Proportionalitätsfaktors gekennzeichnet ist, nicht möglich. Gemäß einer weiteren bevorzugten Ausführungsform wird deshalb eine Zuordnungstabelle verwendet, bei der die Abhängigkeit zwischen den Zeitdauern und den Leistungswerten der zugeordneten Leistungsstufen nichtlinear ist. Hiermit wird die Nichtlinearität des Heizelementes in schrittweise linearisierter Form dargestellt.

Wie einleitend ausgeführt, betrifft eine bevorzugte Ausführungsform der vorliegenden Erfindung eine elektrische Heizvorrichtung zum Erwärmen von Fluiden. Im Kraftfahrzeugbereich sind hierbei Luft- und Wasserheizungen bevorzugt.

Vorzugsweise liegt die Bordspannung im automobiltechnischen Hochvoltbereich, insbesondere im Bereich von 200 V bis 500 V. Beispielsweise sind bei Fahrzeugen mit Elektroantrieb Bordnetzspannungen von etwa 300 V bis 350 V gebräuchlich.

Gemäß einer bevorzugten Ausführungsform handelt es sich bei den Heizelementen um PTC (positive temperature coeffizient)-Heizelemente.

Weiterhin wird die Nachregelung gemäß einer bevorzugten Ausführungsform mit Hilfe einer Regeleinrichtung implementiert, die einen Mikrocontroller umfasst. Gemäß der bevorzugten Ausführungsform erfolgt die Regelung im Mikrocontroller niedervoltseitig.

Weitere vorteilhafte Ausgestaltungen der vorliegenden Erfindung sind Gegenstand von Unteransprüchen.

Die Erfindung wird im Folgenden anhand der beiliegenden Figuren beschrieben, in denen:

Fig. 1 eine beispielhafte Darstellung eines Luftheizers für den automobiltechnischen Hochvoltbereich mit integrierter Elektronik darstellt;

Fig. 2 einen schematischen Aufbau einer Verdrahtungsplatine mit aufgesetzter Steuerelektronik und einem Leistungsschalter für einen Hochvolt-Luftheizer mit integrierter Elektronik darstellt;

Fig. 3 den schematischen Grundaufbau einer elektrischen Heizvorrichtung gemäß einer Ausführungsform der vorliegenden Erfindung zeigt;

Fig. 4 weitere Details des Aufbaus einer elektrischen Heizvorrichtung gemäß einer Ausführungsform der Erfindung zeigt;

Fig. 5 ein Beispiel für eine Zuordnungstabelle für die Ansteuerung der ersten Heizstufe gemäß einer Ausführungsform der vorliegenden Erfindung darstellt; und

Fig. 6 ein Beispiel für eine feinstufige kombinierte PWM/binäre Leistungsansteuerung/Leistungsstellung zeigt.

Die vorliegende Erfindung betrifft eine regelbare elektrische Kraftfahrzeugheizung, die vorzugsweise als Luft- oder Warmwasserheizung ausgebildet sein kann.

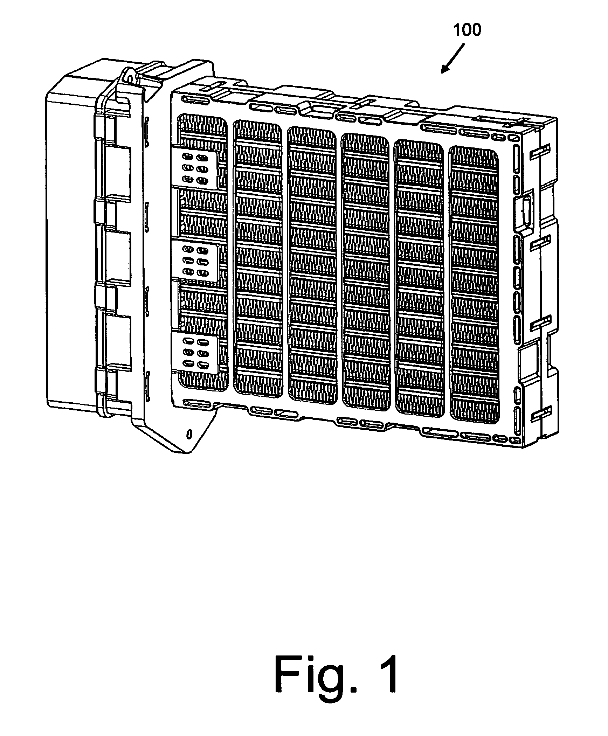

Fig. 1 zeigt den äußeren Aufbau einer beispielhaften Heizvorrichtung 100 gemäß der vorliegenden Erfindung. Beispielhaft stellt Fig. 1 einen Luftheizer für den automobiltechnischen Hochvoltbereich mit integrierter Elektronik dar. Die einzelnen Heizelemente sind in dem auf der rechten Seite der Zeichnung dargestellten Gehäuserahmen eingebaut. Die integrierte Steuerelektronik befindet sich in dem links dargestellten Anschlusskasten.

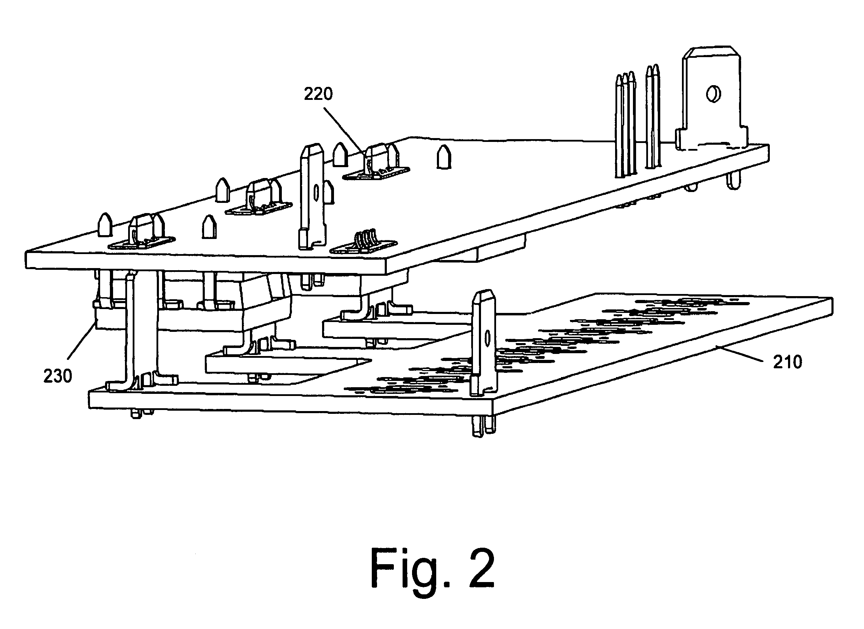

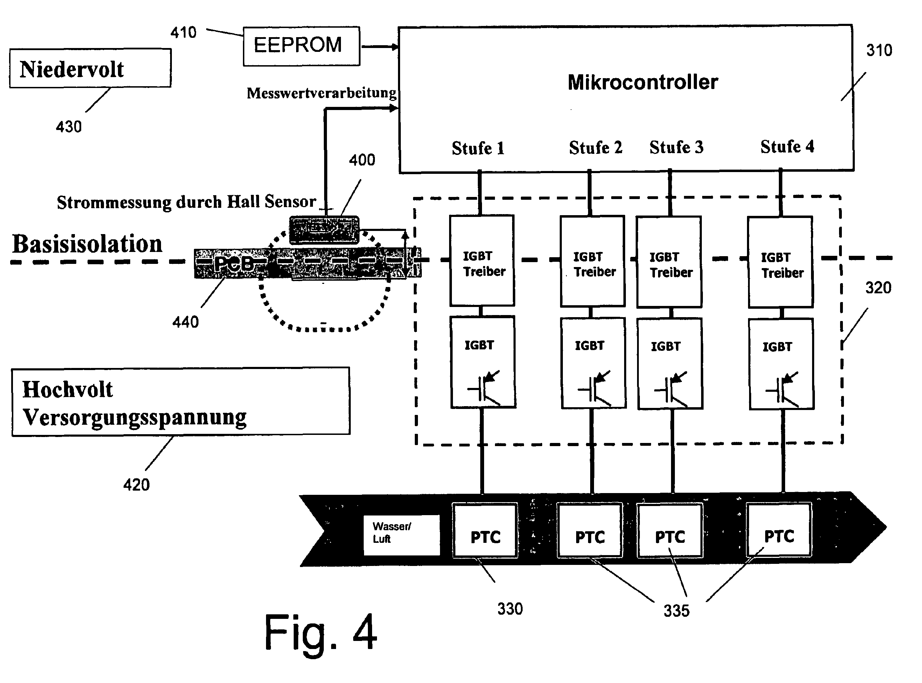

Details des äußeren Aufbaus der Elektronik sind in Fig. 2 dargestellt. Fig. 2 zeigt einen modularen Aufbau der Elektronik in sandwichartiger Form, bei dem die verschiedenen Module über eine Verdrahtungsplatine 210 miteinander verbunden sind. Insbesondere betrifft dies die Steuerungselektronik 220 und die Leistungsschalter 230. Die Steuerungselektronik 220 umfasst Komponenten zur Steuerung und zur Regelung gemäß der vorliegenden Erfindung. Insbesondere dienen Leistungsschalter 230 als Bestandteile der Steuereinrichtung gemäß der Erfindung dem unmittelbaren Stellen der Heizleistung durch Zu- und Abschalten eines kontrollierten Stromflusses durch die jeweils den Leistungsschaltern zugeordneten Heizelemente einer Heizstufe. Weitere Details des Aufbaus der Elektronik gemäß einer beispielhaften Ausführungsform werden im Zusammenhang mit Fig. 4 erläutert.

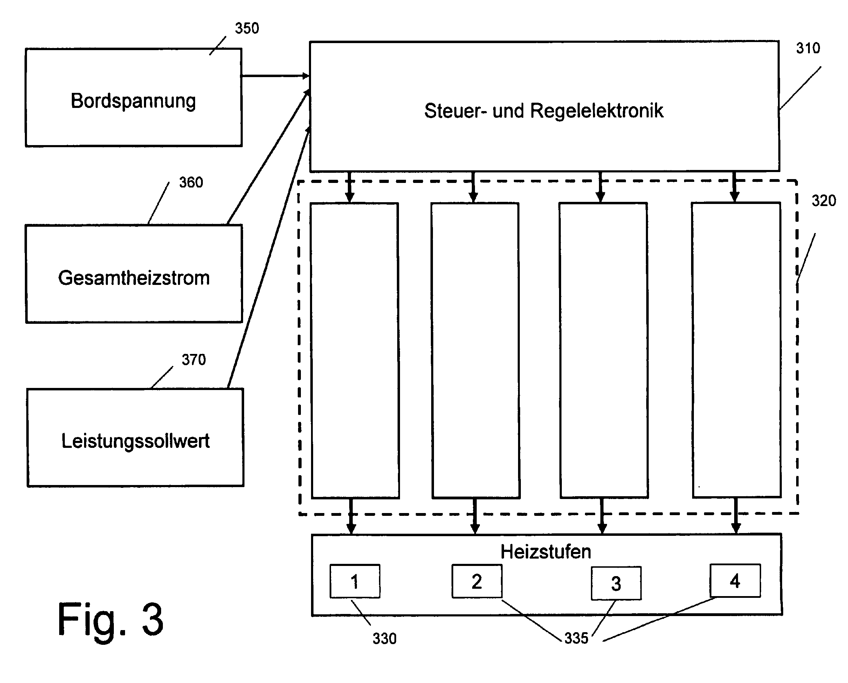

Fig. 3 zeigt beispielhaft einen schematischen Aufbau einer Heizvorrichtung gemäß der vorliegenden Erfindung. In dem dargestellten Beispiel umfasst die Heizvorrichtung vier Heizstufen 1 bis 4. Die vier Heizstufen umfassen eine erste Heizstufe 330 sowie (in der beispielhaften Darstellung drei) weitere Heizstufen 335. Gemäß der vorliegenden Erfindung ist die erste Heizstufe 330 kontinuierlich oder stufig (quasikontinuierlich) in kleinen Schritten ansteuerbar. Die weiteren Heizstufen 335 sind binäre Heizstufen, deren Leistung nur zwischen Null und einem Maximalwert umschaltbar ist. Der unmittelbaren Ansteuerung der Heizstufen dient eine Gruppe von Leistungsschaltern 320. Die Leistungsschalter sind jeweils einer der Heizstufen zugeordnet. Zur Ansteuerung der Leistungsschalter dient die Steuerelektronik 310, die gemäß einer bevorzugten Ausführungsform als Mikrocontroller implementiert ist.

Hierbei kann eine erste Einstellung der Heizleistung entsprechend einer Leistungsanforderung unter Annahme von Nominalbedingungen für die Betriebs- und Umgebungsparameter erfolgen. Beispiele für herstellerseitig eingestellte Nominalbedingungen sind z.B. eine Bordspannung von 350 Volt sowie die Annahme einer Lufttemperatur von 0° C bei einem Luftheizer. Darüber hinaus schließen die Nominalbedingungen auch eine festgelegte Strömungsgeschwindigkeit (z.B. Luftdurchsatzgeschwindigkeit 300kg/h bzw. bei flüssigem Medium 10l/min) ein. Die unter Nominalbedingungen zur Erreichung einer vorgegebenen Leistungsanforderung erforderlichen Steuerparameter sind herstellerseitig hinterlegt. Dies kann z.B. in Form von Firmware oder Software in einem EEPROM erfolgen.

Zur Anpassung an die Betriebsbedingungen und veränderte Umgebungsbedingungen wird die so im ersten Schritt voreingestellte Leistung (Nennwert) an die genaue Leistungsanforderung durch Nachregelung angepasst. Zu diesem Zweck ist in die Steuerelektronik 310 eine Regeleinrichtung integriert, mit deren Hilfe ein Regelkreis zur Nachregelung der von der Steuereinrichtung eingestellten Heizleistung realisiert wird. Alternativ ist es im Rahmen der vorliegenden Erfindung auch möglich, die Regeleinrichtung in getrennter Hardware vorzusehen. Die Regeleinrichtung benötigt zur Nachregelung den Wert der Bordspannung 350, die Sollwertvorgabe 370 für die von der Heizvorrichtung aufzunehmende Leistung, sowie den gemessenen Wert des Gesamtheizstroms 360. Der Gesamtheizstrom schließt den über einen Taktrahmen oder mehrere Taktrahmen gemittelten Wert des Stroms für eine mittels Modulation des Stroms (z.B. PWM) angesteuerte Heizstufe ein. Die Mittelung kann mittels Software in einem Mikrocontroller erfolgen.

Die Bordspannung 350 kann hierbei auf verschiedene Weise bereitgestellt werden.

Gemäß einer bevorzugten Ausführungsform kann die Bordspannung als Festwert, zum Beispiel in einem EEPROM, gespeichert werden. Hierbei wird ein vorab fest eingestellter Nennwert für die Bordspannung verwendet. Eine solche Ausführungsform ist besonders kostengünstig zu realisieren. Sie hat allerdings den Nachteil, dass der momentane Ist-Wert der Heizleistung nicht exakt bestimmt werden kann, da Abweichungen der Bordspannung vom Nennwert im Betrieb nicht berücksichtigt werden.

Alternativ kann die Bordspannung 350 im Fahrzeug, auf der Platine der Heizvorrichtung, direkt gemessen werden. Hiermit wird der Nachteil der oben genannten Ausführungsform beseitigt, denn bei jeder Änderung der Bordspannung im Betrieb kann der aktuelle Wert sehr schnell bereitgestellt werden. Ein Nachteil dieser Ausführungsform sind allerdings die aufgrund der speziell vorzusehenden Spannungsmesseinrichtung am Heizer entstehenden hohen Kosten.

Weiterhin alternativ ist eine Bereitstellung als Nachricht aus dem Kraftfahrzeugbordnetz über einen Fahrzeugbus möglich. Die Bordnetzspannung 350 wird ständig im Fahrzeug erfasst und über das Bordnetz bereitgestellt. Diese Ausführungsform stellt insofern einen Kompromiss dar, als sie kostengünstiger ist als die Direktmessung, aber dafür die Änderungen langsamer berücksichtigt. Ein aktualisierter Wert der Bordnetzspannung 350 steht bei dieser Ausführungsform nur alle 200 bis 300 Millisekunden (ms) zur Verfügung.

Die Heizleistungsvorgaben 370 erhält die Regeleinrichtung 310 zum Beispiel aus dem Fahrzeugbordnetz über den Fahrzeugbus (zum Beispiel LIN- oder CAN- Datenbus). Sie können zum Beispiel automatisch so festgesetzt werden, dass vorhandene Leistungsreserven des Bordnetzes möglichst vollständig ausgeschöpft werden. Sie können auch vom Fahrer über das Klimabedienteil vorgegeben werden.

Alternativ ist es auch möglich, anstelle der Leistungsvorgaben 370 eine gewünschte Temperatur vorzugeben. Dies kann zum Beispiel eine Temperatur an einem bestimmten Teil des Fahrzeugs, wie eine Innenraumtemperatur, oder eine Temperatur des strömenden Mediums, sein. Die Temperaturvorgabe 220 wird von der Steuerungselektronik 220 in eine Leistungsvorgabe 370 umgesetzt.

Mit Hilfe der Bordspannung 350 und des Gesamtheizstroms 360 wird zunächst die aufgenommene Leistung (Istwert) ermittelt. Hierzu wird der gemessene und gegebenenfalls geeignet zeitlich, zum Beispiel über einen oder mehrere Taktrahmen gemittelte, Stromwert 360 mit der Bordspannung multipliziert. Der Istwert der Gesamtheizleistung ergibt sich gemäß der Gleichung

$$P = U \times I,$$

wonach die von einem Bauelement (hier: die Gesamtheit der Heizstufen der Heizvorrichtung 100) aufgenommene elektrische Leistung P gleich dem Produkt aus der am Bauelement anliegenden Spannung U und dem insgesamt durch das Bauelement fließenden Strom I ist. Der so ermittelte Istwert der momentanen Gesamtleistung der Heizvorrichtung 100 wird anschließend durch einen in der Regeleinrichtung implementierten Komparator mit der vorgegebenen Leistungsanforderung (Sollwert) verglichen. Darauf basierend wird die Steuereinrichtung veranlasst, die Leistungsaufnahme durch eine entsprechende Anpassung der Heizleistungseinstellung zu korrigieren. Die neu einzustellende Heizleistung (Nennwert) entspricht in einer bevorzugten Ausführungsform dem um die Sollwertabweichung verminderten oder erhöhten zuvor eingestellten Nennwert. Die Korrektur geschieht zunächst über die Einstellung der kontinuierlichen/quasikontinuierlichen ersten Heizstufe 330. Je nach Erfordernis kann darüber hinaus das Zu-/Abschalten der weiteren binären Heizstufen 335 in die Korrekturanpassung der Heizleistung einbezogen werden.

In dem Regelkreis zur Nachregelung wird so ständig der eingestellte Nennwert der Heizleistung angepasst. Mit dem so erläuterten Konzept übernimmt der Heizer immer eine Nachregelung der Leistung in Richtung Sollwert. Die Nachregelung kann, durch entsprechend festgelegte und zeitlich variable Leistungsanforderungen, weiterhin auch dazu verwendet werden, immer die maximalen, im Fahrzeug vorhandenen Leistungsreserven auszuschöpfen.

Eine detailliertere Darstellung der wesentlichen Elemente einer erfindungsgemäßen regelbaren Heizvorrichtung ist in Fig. 4 gezeigt. Gemäß der in Fig. 4 gezeigten Ausführungsform umfasst die Heizvorrichtung einen Lastkreis mit einer Versorgungsspannung im automobilen Hochvoltbereich 420 und einen Steuerkreis mit einer Arbeitsspannung im Niedervoltbereich 430. Beide Bereiche müssen galvanisch gut voneinander isoliert sein (Basisisolation). Hierbei sind insbesondere auch Hochvolt- und Niedervoltbereiche auf der Platine (PCB - printed circuit board) 440 voneinander elektrisch isoliert. Eine Strommessung (Messung des durch die Heizvorrichtung fließenden Gesamtstroms) wird im vorliegenden Fall auf besonders einfache Weise, und ohne Beeinflussung der elektrischen Isolierung auf elektromagnetischem Wege, mit Hilfe eines Hall-Sensors 400 ausgeführt (indirekte Strommessung).

Der Mikrocontroller 310 verarbeitet sowohl Messwerte, als auch im System vorgegebene Festwerte, wie etwa die Bordspannung oder eine Zuordnungstabelle für eine quasikontinuierliche Leistungsansteuerung der ersten Heizstufe mittels PWM. Als Speichereinrichtung für derartige Systemparameter ist beispielhaft EEPROM 410 dargestellt. In der vorliegenden Ausführungsform umfasst die Gruppe von Steuerelementen 320 für jede der Heizstufen 330, 335 (hier veranschaulicht durch jeweils ein PTC-Heizelement) separat ansteuerbare Leistungsschalter, vorzugsweise ausgeführt als IGBT (Insulated Gate Bipolar Transistor)-Leistungsschalter. Die im Hochvoltbereich arbeitenden IGBT-Leistungsschalter werden von IGBT-Treibern angesteuert, die ihre Steuersignale wiederum niedervoltseitig vom Mikrocontroller 310 erhalten. Vorzugsweise ist die Schaltergruppe 320 mit allen IGBT- Treibern und IGBT- Schalttransistoren in einem gemeinsamen Gehäuse untergebracht.

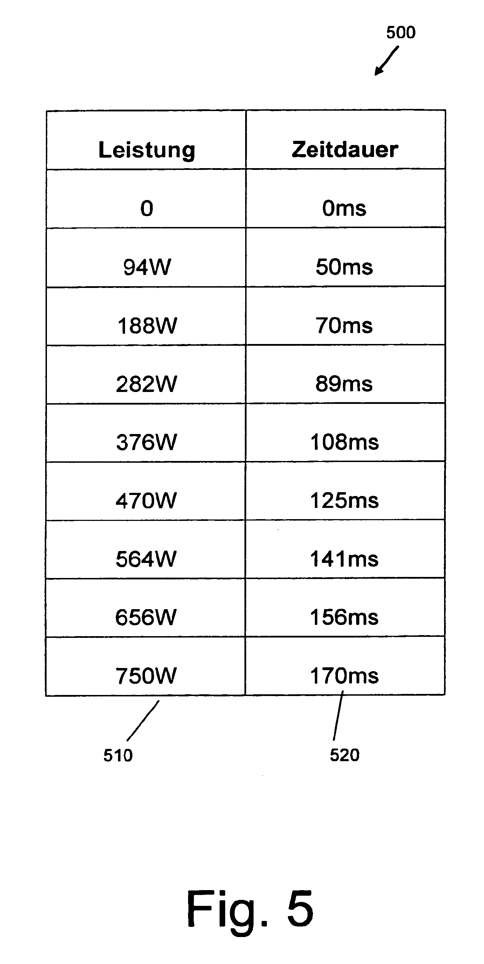

Es folgt eine detaillierte Beschreibung eines beispielhaften Ansteuerungs- und Regelungskonzepts gemäß der vorliegenden Erfindung. Es wird ein spezielles Ausführungsbeispiel für die Leistungsansteuerung einer in kleinen Stufen (quasikontinuierlich) ansteuerbaren Heizstufe unter Bezug auf die in Fig. 5 gezeigte Zuordnungstabelle 500 erläutert.

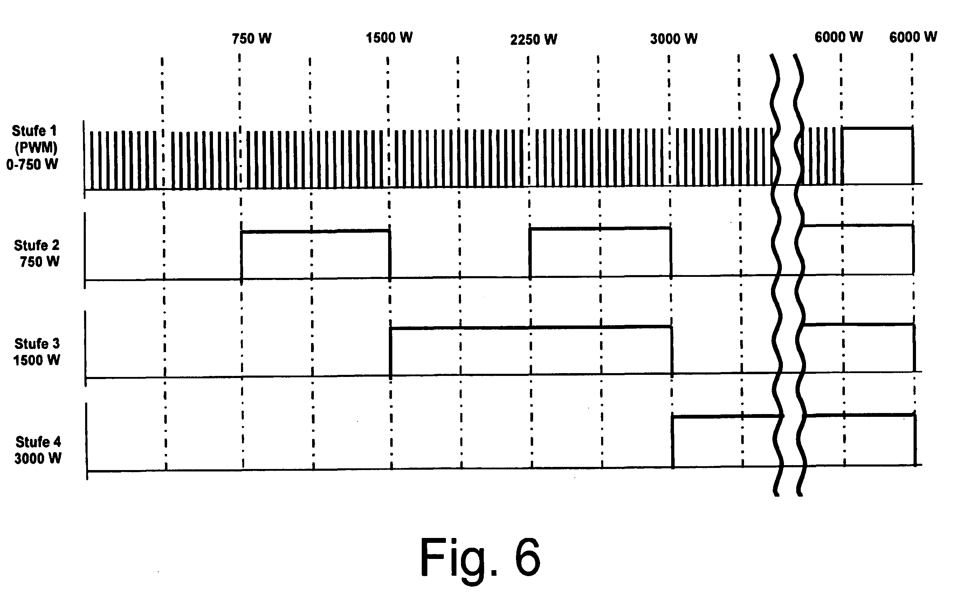

Die Steuerung erfolgt dabei in einem Verfahren, welches prinzipiell auf PWM (pulse width modulation) beruht, aber modifiziert wurde, um speziell die Möglichkeit eines Einsatzes von Heizelementen mit einer nichtlinearen Charakteristik, wie z.B. PTC-Elementen, zu ermöglichen. Die Maximalleistung im Beispiel der Fig. 5, 750W, wird hierbei durch permanente Zuschaltung der ersten Heizstufe (s. Stufe 1 in Fig. 6, max. 750W) erreicht. Dies bedeutet, dass die Zeitdauer der Ansteuerung gleich der Länge des Taktrahmens ist, oder anders ausgedrückt, ein Tastverhältnis von 100%. Sie kann alternativ auch durch permanente Zuschaltung der zweiten, binären Heizstufe mit 750W Leistung bei abgeschalteter erster Heizstufe erreicht werden. Das Steuerungskonzept wird weiter unten unter Bezug auf Fig. 6 näher erläutert. Im EEPROM ist also ein diskretes Kennfeld mit - im vorstehenden Beispiel der Fig.5 (für Stufe 1 in Fig.6) - acht Leistungsstufen abgelegt.

Bei einer herkömmlichen PWM wird ein Tastverhältnis proportional zur angeforderten Leistung verwendet. Beträgt also z.B. die Leistungsanforderung 50% der maximal von der Heizstufe aufzunehmenden Leistung, so wird eine Ansteuerung mit einem Tastverhältnis von 50% innerhalb eines festen Taktrahmens vorgenommen. Eine solche Ansteuerung (Tastverhältnis proportional zur Leistungsanforderung) entspricht einer linearen Abhängigkeit der Leistung vom Tastverhältnis. Diese ist aber im automobiltechnischen Hochvoltbereich nicht gegeben. Bei einem typischen Beispiel für bei ca. 350V verwendete PTC- Heizelemente werden bei einem Tastverhältnis von 40% bereits 80% Nennleistung unter Nominalbedingungen erreicht. Die Beziehung zwischen Tastverhältnis und Nennleistung kann aber auch einen ganz anderen nichtlinearen Verlauf haben, so wie zum Beispiel in Fig. 5 gezeigt.

Im Gegensatz zur herkömmlichen PWM sind bei dem hier geschilderten speziellen Steuerungskonzept einzelne Leistungsstufen und zugehörige Ansteuerungszeiten innerhalb eines Taktrahmens als Festwerte in der Steuerelektronik der Heizvorrichtung hinterlegt. Gemäß der bevorzugten Ausführungsform erfolgt dies in Form einer Tabelle (Zuordnungstabelle) mit einer Anzahl von Wertepaaren, die auf der einen Seite eine einzustellende Leistung und auf der anderen Seite die dazu erforderliche Ansteuerungsdauer angeben.

Ein einfaches Beispiel für eine solche Zuordnungstabelle 500 zeigt Fig. 5. In der linken Spalte 510 sind die einzelnen ansteuerbaren Leistungsstufen (Nennleistungen entsprechend Nominalbedingungen) als Festwerte gespeichert. Wie der beispielhaft aufgeführten Tabelle 500 zu entnehmen ist, ist in diesem Beispiel die maximale Leistungsaufnahme der Heizstufe (bei permanenter Ansteuerung) 750 Watt. Der Bereich von 0 bis 750 Watt ist in acht Stufen eingeteilt, so dass eine feinstufige (quasikontinuierliche) Einstellung der Heizleistung, mit Stufen unterhalb 100 Watt, ermöglicht wird.

In der rechten Spalte 520 der Tabelle 500 sind die den jeweiligen Nennleistungsstufen zugeordneten Ansteuerzeiten in Millisekunden hinterlegt. Die Ansteuerung der Heizstufen erfolgt so, dass je nach angeforderter Leistung die Heizstufe für die zugeordnete Zeitdauer durch Einschalten des Stromflusses unter der jeweiligen Bordspannung angesteuert wird. Wie bei einer herkömmlichen PWM wird die Ansteuerung bei einem neuen Taktrahmen wiederholt. Die Länge des fest vorgegebenen Taktrahmens liegt im vorliegenden Beispiel bei 170ms. Die Länge des Taktrahmens ist aber nicht erfindungswesentlich. Es sind auch ganz andere Taktrahmenlängen von z.B. 150ms oder 200ms oder aber Taktrahmen von einer ganz anderen Größenordnung möglich.

Auf diese Weise kann der Zusammenhang zwischen der Heizleistungsanforderung und der dazu abgespeicherten Ansteuerungsdauer pro Taktrahmen in der Zuordnungstabelle beliebig ausgestaltet sein. Damit lässt sich insbesondere die Nichtlinearität eines PTC-Heizelementes im Hochvoltbereich kompensieren. Hierzu werden die entsprechenden Ansteuerungszeiten vorab empirisch ermittelt, und herstellerseitig im EEPROM 410 abgespeichert. Die Nennleistungen und dazu empirisch ermittelten Ansteuerzeiten entsprechen festgelegten Nominalbedingungen, also insbesondere einer vorgegebenen Bordspannung (z.B. 350 V) und einer festen Temperatur der Umgebung des Heizelementes (z.B. 0°C). Aufgrund der vorab festgelegten Wertetabelle findet im Rahmen dieser Ansteuerung also keine Anpassung an aktuell veränderte Betriebsparameter und insbesondere keine Temperaturkompensation statt, was in der Praxis zu Toleranzen im Bereich von ca. maximal 30 % führt. Dieser Nachteil der vorstehend beschriebenen einfachen und robusten Ansteuerung der Leistungsstufen einer quasikontinuierlichen Heizstufe wird im Rahmen der vorliegenden Erfindung in guter Näherung durch die ständige Nachregelung, basierend auf einem Soll-Istwertvergleich, wie oben beschrieben, ausgeglichen. Es wird hierbei insbesondere berücksichtigt, dass sich auch die Abweichung der realen Umgebungsbedingungen, sowie weiterer Betriebsparameter wie Bordspannung und Strömungsgeschwindigkeit, von den Nominalbedingungen im realen Betrieb ständig ändern kann.

Übliche Spannungsschwankungen in Bordnetzen im automobilen Hochvoltbereich liegen in einer Größenordnung von 100V. Elektrofahrzeuge besitzen beispielsweise eine Nennspannung von 350V. Nach Aufladung der Batterie kann die Bordnetzspannung bis auf ca. 380V ansteigen, bei Entladung bis auf ca. 280V abfallen. Eine entsprechende Schwankung haben auch Elektrofahrzeuge mit einer anderen Nennspannung des Bordnetzes, zum Beispiel 400V. Für Hybridfahrzeuge liegt die Nennspannung bei ca. 288V, die maximale Bordnetzspannung bei ca. 350V, die minimale Spannung bei ca. 200V.

Die erfindungsgemäße Regelung durch Überwachung der tatsächlich erbrachten Heizleistung ist prinzipiell auch in 12V- Bordnetzen anwendbar. Jedoch spielt eine Spannungsschwankung bei 12V- Bordnetzen (beispielsweise auf 12,5V) für die Heizleistung nur eine untergeordnete Rolle. Entscheidend ist im wesentlichen die Stromstärke (wesentlich höher als im automobilen Hochvoltbereich).

Die Einstellung der Leistungsstufen durch die Steuereinrichtung erfolgt also auf der Grundlage von Nennleistungen, die vorgegebenen Nominalbedingungen entsprechen. Die Angleichung der realen Heizleistung an den Leistungssollwert erfolgt durch die Nachregelung im Regelkreis. Hierbei wird zur Minimierung der vom Komparator ermittelten Differenz zwischen Ist- und Sollleistung eine der Differenz entsprechende Nennleistung zu- oder abgeschaltet.

Im Rahmen des vorstehend erläuterten Ansteuerungskonzeptes ist es weiterhin auch möglich, größere Gesamtheizleistungen feinstufig anzusteuern. Hierzu wird eine Kombination einer feinstufig ansteuerbaren ersten Heizstufe mit weiteren binären Heizstufen verwendet, wie diese oben in Zusammenhang mit den Figuren 3 und 4 erwähnt wurde.

Beispielhaft ist die Ansteuerung von Leistungswerten zwischen 0 und 6000 Watt mit Hilfe einer solchen Kombination in Fig. 6 gezeigt. Es sind insgesamt vier Heizstufen vorgesehen. Die erste (quasikontinuierliche) Heizstufe hat im vorliegenden Beispiel eine maximale Leistungsaufnahme von 750 Watt. Die Leistungsaufnahmen der binären Heizstufen sind wie folgt: zweite Heizstufe: 750 Watt, dritte Heizstufe: 1500 Watt und vierte Heizstufe: 3000 Watt.

Im Bereich von 0 bis 750 Watt ist eine feinstufige Ansteuerung, wie oben beschrieben, allein unter Verwendung der ersten Heizstufe möglich. Im folgenden Bereich zwischen 750 Watt und 1500 Watt (also wieder einem Bereich von 750 Watt) wird die zweite Heizstufe binär zugeschaltet, während die erste Heizstufe nach dem obigen Konzept die Feinsteuerung innerhalb des Bereiches liefert. In dem nächsten 750 Watt umfassenden Bereich (von 1500 Watt bis 2250 Watt) erfolgt dies analog unter Zuschaltung der dritten Heizstufe, wobei die zweite Heizstufe wieder abgeschaltet wird. Im nachfolgenden Bereich zwischen 2250 Watt und 3000 Watt werden die zweite und dritte binäre Heizstufe gleichzeitig zugeschaltet. Ab 3000 Watt wird die vierte Heizstufe permanent zugeschaltet, so dass auf analoge Weise wie oben für den Bereich unterhalb 3000 Watt beschrieben, die Heizleistung im Gesamtbereich bis 6000 Watt in insgesamt 64 Schritten (entsprechend "Stützpunkten" einer stufenweise linearen Abbildung) feinstufig gesteuert werden kann. Die Anzahl der Stufen (hier: 8 für eine einzelne Heizstufe bis 750W und 8 x 8 = 64 im Gesamtbereich über 8 x 750W = 6000W) dient jedoch nur zur beispielhaften Veranschaulichung. Vorzugsweise werden mehr als 50 Stufen, zum Beispiel zwischen 50 und 100 Stufen verwendet. Es sind aber auch mehr als 100 Stufen und auch eine noch deutlich größere Anzahl von Stufen, zum Beispiel ungefähr 200 Stufen möglich. Je mehr Teilschritte verwendet werden, desto feiner ist die Auflösung der einstellbaren Heizleistung.

Mit einem solchen Steuerkonzept wird erreicht, dass die PWM-Taktung nur in einer ersten Heizstufe, die den kleinsten Leistungsbereich umfasst, erforderlich ist, während im höheren Leistungsbereich eine einfache binäre Ansteuerung erfolgt. Die Anwendung der PWM erfolgt nur zur Feinstellungs-Regelung. Dadurch werden Störungen im Hochvoltbereich durch EMV-Abstrahlung weitgehend vermieden. Die Taktfrequenzen der quasikontinuierlichen Heizstufe werden darüber hinaus hinsichtlich EMV/Ripplestrom optimiert. Generell bewirkt zudem eine feinere Auflösung der Teilschritte geringere Störungen im Hochvolt- Bordnetz.

Zusammenfassend, betrifft die vorliegende Erfindung eine regelbare elektrische Heizvorrichtung für Kraftfahrzeuge, insbesondere mit Elektroantrieb. Durch eine Nachregelung, basierend auf einem Soll-Istwertvergleich, wird die Leistung unter ständig veränderten Betriebsbedingungen an eine vorgegebene Leistungsanforderung angepasst. Hierzu wird der Gesamtstrom durch die Heizvorrichtung, z.B. mit einem Hall-Sensor, gemessen, und durch Multiplikation mit der vorgegebenen Bordspannung die momentane Leistungsaufnahme (Istwert) ermittelt.

## Patentansprüche

1. Elektrische Heizvorrichtung für ein Kraftfahrzeug, insbesondere mit Elektroantrieb, umfassend
   eine Steuereinrichtung (230, 320) zum Einstellen einer Heizleistung über den durch die Heizvorrichtung fließenden Strom;
   eine Einrichtung zum Messen des Gesamtheizstroms (360); und
   eine Berechnungseinrichtung (310) zum Berechnen einer momentanen Heizleistung aus dem gemessenen Gesamtheizstrom (360) und einer Bordspannung (350) des Kraftfahrzeugs; wobei
   die von der Steuereinrichtung (230, 320) einzustellende Heizleistung basierend auf der momentanen Heizleistung und einem Sollwert (370) nachgeregelt wird;
   **dadurch gekennzeichnet, dass**
   die Bordspannung (350) im automobiltechnischen Hochvoltbereich liegt; und
   die Bordspannung (350) unmittelbar in der Heizvorrichtung gemessen wird.

2. Elektrische Heizvorrichtung nach Anspruch 1, wobei die Einrichtung zum Messen des Gesamtheizstroms (360) einen Hall-Sensor (400) umfasst.

3. Elektrische Heizvorrichtung nach Anspruch 1 oder 2, umfassend eine erste elektrische Heizstufe (330) mit mindestens einem Heizelement, wobei die Heizleistung der ersten elektrischen Heizstufe (330) durch die Steuereinrichtung (230, 320) kontinuierlich oder feinstufig einstellbar ist.

4. Elektrische Heizvorrichtung nach Anspruch 3, weiterhin umfassend
   eine oder mehrere weitere elektrische Heizstufen (335) mit jeweils mindestens einem Heizelement;
   wobei die Heizleistung der weiteren elektrischen Heizstufen (335) jeweils nur zwischen Null und einer Maximalleistung umschaltbar ist, und
   die Heizleistung durch die Steuereinrichtung (230, 320) über den durch die Heizstufen jeweils fließenden Strom separat für die elektrischen Heizstufen (330, 335) einstellbar ist.

5. Elektrische Heizvorrichtung nach Anspruch 3 oder 4, wobei die Heizleistung der ersten Heizstufe (330) über eine Modulation des durch die Heizstufe (330) fließenden Stroms feinstufig einstellbar ist;
   die Heizvorrichtung weiterhin einen nichtflüchtigen Speicher (410) zum Abspeichern einer Zuordnungstabelle (500) umfasst, die jeder Leistungsstufe einer Mehrzahl vorgegebener Leistungsstufen (510) eine Zeitdauer (520) für die Ansteuerung der ersten elektrischen Heizstufe (330) zuordnet; und
   die Steuereinrichtung (230, 320) zur Einstellung der Heizleistung der ersten elektrischen Heizstufe (330) den Stromfluss durch die erste elektrische Heizstufe (330) für die einer Leistungsstufe (510) in der Zuordnungstabelle (500) zugeordnete Zeitdauer (520) innerhalb eines vorgegebenen Taktrahmens aktiviert.

6. Elektrische Heizvorrichtung nach Anspruch 5, wobei die Abhängigkeit zwischen den in der Zuordnungstabelle (500) gespeicherten Zeitdauern (520) und den Leistungswerten der zugeordneten Leistungsstufen (510) der ersten elektrischen Heizstufe nichtlinear ist.

7. Elektrische Heizvorrichtung nach einem der vorherigen Ansprüche, geeignet zum Erwärmen von Fluiden.

8. Elektrische Heizvorrichtung nach einem der Ansprüche 1 bis 7, weiterhin umfassend einen Komparator (310) zum Bestimmen einer Abweichung der momentanen Heizleistung von dem Sollwert (370); wobei die Nachregelung die Abweichung der momentanen Heizleistung von dem Sollwert (370) minimiert.

9. Elektrische Heizvorrichtung nach einem der Ansprüche 1 bis 8, wobei die Heizelemente PTC- Heizelemente sind.

10. Elektrische Heizvorrichtung nach einem der Ansprüche 1 bis 9, wobei die Nachregelung mit einem Mikrocontroller (310) implementiert ist.

11. Verfahren zum Ansteuern einer elektrischen Heizvorrichtung für ein Kraftfahrzeug, bei der die Heizleistung über den durch die Heizvorrichtung fließenden Strom eingestellt wird, umfassend die Schritte Messen des Gesamtheizstroms (360); Berechnen einer momentanen Heizleistung aus dem gemessenen Gesamtheizstrom (360) und einer Bordspannung (350) des Kraftfahrzeugs; und Nachregeln der einzustellenden Heizleistung basierend auf der momentanen Heizleistung und einem Sollwert (370), **dadurch gekennzeichnet, dass** die Bordspannung (350) im automobiltechnischen Hochvoltbereich liegt; und durch den Schritt Messen der Bordspannung (350) unmittelbar in der Heizvorrichtung.

12. Verfahren nach Anspruch 11, wobei die Heizvorrichtung eine erste elektrische Heizstufe (330) mit mindestens einem Heizelement umfasst, und der Schritt des Einstellens die erste elektrische Heizstufe (330) kontinuierlich oder feinstufig einstellt.

**Claims**

1. An electrical heating device for a motor vehicle, in particular with electrical propulsion, comprising a control device (230, 320) for adjusting a heating power by means of the current flowing through the heating device, a device for measuring the total heating current (360); and a calculation device (310) for calculating a momentary heating power from the measured total heating current (360) and an on-board electrical voltage (350) of the motor vehicle; wherein the heating power to be adjusted by the control device (230, 320) is readjusted based on the momentary heating power and a set value (370); **characterized in that** the on-board electrical voltage (350) is in the automotive high voltage range; and the on-board electrical voltage (350) is measured directly in the heating device.

2. An electrical heating device according to claim 1, wherein the device for measuring the total heating current (360) comprises a Hall sensor (400).

3. An electrical heating device according to claim 1 or 2, comprising a first electrical heating stage (330) with at least one heating element, wherein the heating power of the first electrical heating stage (330) can be continuously adjusted or adjusted in fine steps by the control device (230, 320).

4. An electrical heating device according to claim 3, further comprising one or a plurality of further electrical heating stages (335) each with at least one heating element; wherein the heating power of the further electrical heating stages (335) can in each case be switched only between zero and maximum power; and the heating power can be separately adjusted by the control device (230, 320) for the electrical heating stages by means of the current flowing through each of the heating stages (330, 335).

5. An electrical heating device according to claim 3 or 4, wherein the heating power of the first heating stage (330) can be adjusted in fine steps by means of a modulation of the current flowing through the heating stage (330); the heating device further comprises a non-volatile memory (410) for storing an assignment table (500), which assigns a time period (520) for the actuation of the first electrical heating stage (330) to each power stage of a plurality of predetermined power stages (510); and the control device (230, 320) for the adjustment of the heating power of the first electrical heating stage (330) activates the current through the first electrical heating stage (330) for the time period (520) assigned to a power stage (510) in the assignment table (500) within a specified cycle frame.

6. An electrical heating device according to claim 5, wherein the dependence between the time periods (520) stored in the assignment table (500) and the power values of the assigned power stages (510) of the first electrical heating stage is non-linear.

7. An electrical heating device according to any of the preceding claims, suitable for heating fluids.

**8.** An electrical heating device according to any of claims 1 to 7, further comprising a comparator (310) for the determination of a deviation of the momentary heating power from the set value (370); wherein the readjustment minimises the deviation of the momentary heating power from the set value (370).

**9.** An electrical heating device according to any of claims 1 to 8, wherein the heating elements are PTC heating elements.

**10.** An electrical heating device according to any of claims 1 to 9, wherein the readjustment is implemented with a microcontroller (310).

**11.** A method for the control of an electrical heating device for a motor vehicle in which the heating power is adjusted by means of the current flowing through the heating device, comprising the steps of measuring the total heating current (360); calculating a momentary heating power from the measured total heating current (360) and an on-board electrical voltage (350) of the motor vehicle; and readjusting the heating power to be adjusted based on the momentary heating power and a set value (370), **characterized in that** the on-board electrical voltage (350) is in the automotive high voltage range; and by the step of measuring the on-board electrical voltage (350) directly in the heating device.

**12.** A method according to claim 11, wherein the heating device comprises a first electrical heating stage (330) with at least one heating element, and the step of setting adjusts the first electrical heating stage (330) continuously or in fine steps.

**Revendications**

**1.** Dispositif de chauffage électrique pour un véhicule automobile, en particulier un véhicule à entraînement électrique, comprenant un dispositif de commande (230, 320) pour régler une puissance de chauffage via le courant qui traverse le dispositif de chauffage ; un dispositif pour mesurer le courant de chauffage total (360) ; et un dispositif de calcul (310) pour calculer une puissance de chauffage momentanée à partir du courant de chauffage total mesuré (360) et d'une tension de bord (350) du véhicule automobile ; dans lequel :

la puissance de chauffage à régler par le dispositif de commande (230, 320) est réajustée sur la base de la puissance de chauffage momentanée et d'une valeur de consigne (370) ; **caractérisé en ce que** la tension de bord (350) est comprise dans la plage haute tension en technologie automobile ; et la tension de bord (350) est mesurée immédiatement dans le dispositif de chauffage.

**2.** Dispositif de chauffage électrique selon la revendication 1, dans lequel le dispositif pour mesurer le courant de chauffage total (360) comporte un capteur à effet Hall (400).

**3.** Dispositif de chauffage électrique selon la revendication 1 ou 2, comprenant un premier étage de chauffage électrique (330) avec au moins un élément de chauffage, dans lequel la puissance de chauffage du premier étage de chauffage électrique (330) peut être réglée en continu ou par pas serrés au moyen du dispositif de commande (230, 320).

**4.** Dispositif de chauffage électrique selon la revendication 3, comprenant en outre un ou plusieurs étages de chauffage électrique additionnels (335) comportant chacun au moins un élément de chauffage ; dans lequel la puissance de chauffage de chacun des étages de chauffage électrique additionnels (335) ne peut être commutée qu'entre une puissance nulle et une puissance maximale, et la puissance de chauffage peut être réglée par le dispositif de commande (230, 320) séparément pour chacun des étages de chauffage électrique (330, 335) via le courant qui traverse les étages de chauffage.

**5.** Dispositif de chauffage électrique selon la revendication 3 ou 4, dans lequel la puissance de chauffage du premier étage de chauffage (330) peut être réglée par pas serrés via une modulation du courant qui traverse l'étage de chauffage (330) ; le dispositif de chauffage comporte en outre une mémoire non volatile (410) pour stocker une table d'allocation (500) qui alloue à chaque étage de puissance d'une pluralité d'étages de puissance prédéterminés (510) une durée (520) pour la commande du premier étage de chauffage électrique (330) ; et le dispositif de commande (230, 320) pour le réglage de la puissance de chauffage du premier étage de chauffage électrique (330) active le courant qui traverse le premier étage de chauffage électrique (330) pour ladite durée allouée (520) dans la table d'allocation (500) audit étage de puissance (510) dans une trame de phase prédéterminée.

**6.** Dispositif de chauffage électrique selon la revendication 5, dans lequel la dépendance entre la durée (520) stockée dans la table d'allocation (500) et les valeurs de puissance des étages de puissance associés (510) du premier étage de chauffage électrique n'est pas linéaire.

7. Dispositif de chauffage électrique selon l'une des revendications précédentes, adapté pour le chauffage de fluides.

8. Dispositif de chauffage électrique selon l'une des revendications 1 à 7, comprenant en outre un comparateur (310) pour déterminer une déviation de la puissance de chauffage momentanée par rapport à la valeur de consigne (370) ;
   dans lequel le réajustement minimise la déviation de la puissance de chauffage momentanée par rapport à la valeur de consigne (370).

9. Dispositif de chauffage électrique selon l'une des revendications 1 à 8, dans lequel les éléments de chauffage sont des éléments de chauffage PTC.

10. Dispositif de chauffage électrique selon l'une des revendications 1 à 9, dans lequel le réajustement est mis en oeuvre par un microcontrôleur (310).

11. Procédé de commande d'un dispositif de chauffage électrique pour un véhicule automobile dans lequel la puissance de chauffage est réglée via le courant qui traverse le dispositif de chauffage, comprenant les étapes consistant à
   mesurer le courant de chauffage total (360) ;
   calculer une puissance de chauffage momentanée à partir du courant de chauffage total mesuré (360) et d'une tension de bord (350) du véhicule automobile ; et
   réajuster la puissance de chauffage à régler sur base de la puissance de chauffage momentanée et d'une valeur de consigne (370) ;
   **caractérisé en ce que**
   la tension de bord (350) est comprise dans la plage haute tension en technologie automobile ; et par l'étape consistant à
   mesurer la tension de bord (350) immédiatement dans le dispositif de chauffage.

12. Procédé selon la revendication 11, dans lequel le dispositif de chauffage comprend un premier étage de chauffage électrique (330) avec au moins un élément de chauffage, et l'étape de réglage du premier étage de chauffage électrique (330) est effectuée en continu ou par pas serrés.

100

# Fig. 1

Fig. 2

Fig. 3

350

Bordspannung

360

Gesamtheizstrom

370

Leistungssollwert

310

Steuer- und Regelelektronik

320

Heizstufen

| 1 | 2 | 3 | 4 |

330

335

EP 2 371 588 B1

Fig. 4

500

| Leistung | Zeitdauer |
|----------|-----------|
| 0 | 0ms |
| 94W | 50ms |
| 188W | 70ms |
| 282W | 89ms |
| 376W | 108ms |
| 470W | 125ms |
| 564W | 141ms |
| 656W | 156ms |
| 750W | 170ms |

510                    520

# Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19845401 A1
- DE 102008056757 A1